Europäisches Patentamt

European Patent Office

Office européen des brevets

(11) Veröffentlichungsnummer: **0 229 388**
**A2**

(12) **EUROPÄISCHE PATENTANMELDUNG**

(21) Anmeldenummer: **86118018.0**

(22) Anmeldetag: **23.12.86**

(51) Int. Cl.³: **B 01 D 13/01**
**A 61 M 1/18, A 61 M 1/34**

(30) Priorität: **10.01.86 DE 3600527**

(43) Veröffentlichungstag der Anmeldung:
**22.07.87 Patentblatt 87/30**

(84) Benannte Vertragsstaaten:
**BE DE ES FR GB IT NL SE**

(71) Anmelder: **Fresenius AG**
**Gluckensteinweg 5**
**D-6380 Bad Homburg(DE)**

(72) Erfinder: **Mathieu, Bernd, Dr.**
**Galgenbergstrasse 11**
**D-6683 Spiesen-Elversberg(DE)**

(72) Erfinder: **Weber, Wolfram**
**Albert-Schweizer-Strasse 33**
**D-6683 Spiesen-Elversberg(DE)**

(72) Erfinder: **Schulz, Wolfgang**
**Friedrich-Ebert-Strasse 7**
**D-6690 St. Wendel-Ndlw.(DE)**

(74) Vertreter: **Görtz, Dr. Fuchs, Dr. Luderschmidt**
**Patentanwälte**
**Sonnenberger Strasse 100 Postfach 26 26**
**D-6200 Wiesbaden(DE)**

(54) **Hohlfaserfilter zur Gewinnung von Plasma bzw. Plasmawasser sowie Verfahren zu seiner Herstellung.**

(57) Ein erfindungsgemäßes Filter (1) weist ein Filtergehäuse (2) mit einem Innenraum (10) auf, innerhalb dessen zwischen zwei Verschlußteilen (12, 13) Filtermembranen in Form von Hohlfasern (11) angeordnet sind. Zwischen den Hohlfasern (11) verbleibt ein freier Strömungsraum (18), an den zwei schräg am Gehäuse angeordnete Anschlußstutzen (19, 20) angeschlossen sind. Durch diese Anschlußstutzen (19, 20) wird dem Innenraum (10) Blut zugeführt, so daß eine Filtration von außen nach innen in die Hohlfasern (11) möglich wird. Dies und die Anordnung der Stutzen (19, 20) bedingt eine äußerst günstige Anströmung der Hohlfasern (11), so daß die Blutströmung in ihrer Geschwindigkeit und ihrem Strömungsverhalten kaum beeinflußt wird, da ferner der Querschnitt des freien Strömungsraumes (18) dem Querschnitt der Blutzuführleitung angepaßt ist.

Zur Herstellung eines derartigen Filters (1) werden mindestens zwei Filter (1) in einer Ebene parallel im Abstand zueinander angeordnet, wobei die Auflagefläche für die Filter (1) drehbar gelagert ist und die Drehachse (23) keine der beiden Längsachsen der Filter (1) schneidet. Während des Drehens und Zuführens der Vergußmasse für die Verschlußteile (12 und 13) durch stirnseitige Zuführungen in den Innenraum (10) entstehen abgeschrägte Flächen (16, 17), die in ihrem Winkel dem Winkel ($\alpha$, $\beta$) der Stutzen (19 und 20) entsprechen.

Fig. 2

Die Erfindung betrifft ein Hohlfaserfilter zur Gewinnung von Plasma bzw. Plasmawasser, gemäß dem Oberbegriff des Anspruchs 1 sowie ein Verfahren zu seiner Herstellung gemäß dem Oberbegriff des Anspruchs 5.

Bekannte Plasmafilter weisen ein Gehäuse auf, das einen Blutzu- und einen Blutablauf enthält und einen Innenraum aufweist. Im Innenraum des Filtergehäuses ist eine Filtermembran in Form einer Mehrzahl von Hohlfasern angeordnet, die sich in Längsrichtung des Gehäuses erstrecken. Die Hohlfasern weisen einen inneren Strömungsquerschnitt auf, durch den Blut fließt und lassen in ihren Außenbereichen einen freien Strömungsquerschnitt offen, durch den das Filtrat strömt. Die Filtrierung wird hierbei durch Poren in den Wänden der Hohlfasern und durch ein Druckgefälle zwischen dem Hohlfaserinnenraum und dem freien Strömungsraum bewirkt, was beispielsweise durch Anlegen einer Pumpe an den freien Strömungsraum bewerkstelligt werden kann, so daß ein sogen. Transmembrandruckgefälle entsteht.

Die bekannten Filter weisen ferner einen Plasmaablauf auf, der mit dem freien Strömungsquerschnitt in Strömungsverbindung steht. Die Stirnseiten der Hohlfasern sind mit Verschlußteilen versehen, die üblicherweise als Vergußbereiche ausgebildet sind und den Blutzu- und -ablauf vom Plasmaablauf trennen, wobei die Vergußbereiche sowohl die Zwischenräume zwischen den Fasern als auch den Raum um die Fasern herum zwischen diesen und dem Gehäuse dicht abschließen.

Hierbei ist vor allem nachteilig, daß dem Blutfluß im Innern der Kapillaren ein hoher Blutflußwiderstand entgegensteht, der den Blufluß stark begrenzt und damit bei größeren Blutflüssen ein Bypass notwendig wird. Dieser Bypass wiederum bedingt eine Aufteilung des Blutstroms in zwei Bahnen, wobei die Mengen durch die Druckdifferenzen bestimmt werden. Außerdem ist das Filtratraumvolumen bzw. der freie Strömungsquerschnitt außerhalb der Kapillaren relativ groß, so daß Probenahmen von Plasma große Totzeiten enthalten.

Es ist demgegenüber Aufgabe der vorliegenden Erfindung, ein Hohlfaserfilter zur Gewinnung von Plasma bzw. Plasmawasser gemäß dem Oberbegriff des Anspruchs 1 zu schaffen, der eine Probenahme des filtrierten Plasmas bzw. Plasmawassers ermöglicht, ohne daß der Blutfluß wesentlich in seiner Geschwindigkeit und seinem Verhalten beeinflußt wird.

Diese Aufgabe wird durch die Merkmale des Anspruchs 1 gelöst.

Dadurch wird erreicht, daß die Blutströmung nicht mehr durch die Kapillaren, sondern durch die diesen umgebenden freien Strömungsraum erfolgt, der allein schon einen wesentlich geringeren Durchflußwiderstand aufweist als der durch die Summe der Kapillarquerschnitte gebildete Innenquerschnitt der Hohlfasern. Wird die Größe des Querschnittes des freien Strömungsraumes darüber hinaus dem Strömungsquerschnitt einem der Zu-, Ablauf- bzw. Anschlußstutzen angepaßt, wird es möglich, eine Probenahme von Plasma bzw. Plasmawasser praktisch ohne jegliche Beeinflussung der Blutströmung durchzuführen, da - wenn überhaupt - lediglich ein sehr geringer Druckabfall im Bereich des Filters in der Blutströmung entsteht und deshalb auch keine Totzeiten auftreten.

Das erfindungsgemäße Filter wird also von außen nach innen betrieben, d.h. daß die Hohlfasern von Blut umströmt werden und das gewonnene Plasma bzw. Plasmawasser sich im Innenraum der Hohlfasern sammelt und von dort abgeführt wird. Hierbei wird das Filtrat von dem Außenraum der Hohlfasern in deren Innenraum durch eine Pumpe gesaugt.

Hierbei ist besonders vorteilhaft, daß im Vergleich zum Innenvolumen der Hohlfasern der Öffnungsquerschnitt des freien Strömungsraumes so groß gewählt werden kann, daß Blutflüsse von 20 bis über 400 ml/min problemlos realisiert werden können.

Daher eignet sich das erfindungsgemäße Filter besonders für die kontinuierliche Plasmagewinnung zur Monitorisierung bzw. Überwachung von Elektrolyten, Glucose und Medikamenten. Er ermöglicht darüber hinaus eine sogen. Closed-Loop-Regelung von Elektrolytkonzentrationen in der Dialyse ebenso wie die präzise Einstellung eines Diabetikers.

Die Unteransprüche haben vorteilhafte Weiterbildungen der Erfindung zum Inhalt.

Sind jeweils zwei Zu- und Abläufe für Blut bzw. Plasma vorgesehen, ergibt sich der Vorteil, daß das erfindungsgemäße Filter wahlweise von innen nach außen und von außen nach innen betrieben werden kann. Hierbei bietet sich eine Betriebsweise von innen nach außen, also eine Blutzufuhr in den Hohlraum der Filterkapillaren dann an, wenn nur sehr kleine Blutflüsse gegeben sind, da dann der relativ hohe Durchflußwiderstand der Kapillaren nicht in dem Maße zum Tragen kommt.

Die Zu- bzw. Ablaufstutzen für Blut und Plasma sind am axialen Ende des freien Strömungsraumes seitlich angeordnet und zum axialen Ende hin geneigt.

Durch die Anordnung des Zu- bzw. Ablaufstutzens in einem spitzen Winkel von unter 90° am Gehäuse wird erreicht, daß die Blutströmung in ihrem Geschwindigkeitsverhalten noch weiter verbessert werden kann, da die Anströmung der Hohlfasern von außen nach innen noch günstiger ist.

Als besonders günstiger Anströmungswinkel ist bei im Rahmen der Erfindung durchgeführten Untersuchungen ein Winkel von ungefähr 30° ermittelt worden.

Eine weitere Verbesserung der Blutströme ergibt sich, wenn die Verschlußteile an ihren dem Gehäuseinnenraum zugewandten Seiten eine schräg verlaufende Fläche aufweisen, deren Winkel vorzugsweise im wesentlichen dem Winkel der Zu- bzw. Ablaufstutzen bezüglich des Gehäuses entspricht. Dadurch wird neben der Verbesserung der Blutströmung auch erreicht, daß Toträume vermieden werden, so daß sich keine Blutrückstände bilden können, die beim Freispülen des Filters nicht beseitigt werden könnten.

Weiterhin ist erfindungsgemäß ein Verfahren zur Herstellung des erfindungsgemäßen Plasmafilters gegeben, dessen besonderer Vorteil darin besteht, daß es die Ausbildung der zuvor beschriebenen vorteilhaften Abschrägung der vergossenen Verschlußteile auf besonders einfache Art und Weise ermöglicht. Hierzu werden die Zuführleitungen für die Vergußmasse an den Stirnseiten des Filtergehäuses angebracht, wobei ein oder auch zwei bzw.mehrere Filtergehäuse in einer Ebene auf einer
entsprechenden Tragfläche angeordnet werden. Hierbei
weisen z.B. bei zwei Filtergehäusen die schräg am
Gehäuse angebrachten Zulauf- bzw. Ablaufstutzen
aufeinander zu, wobei der Abstand der beiden Gehäuse
zueinander so eingestellt wird, daß sich im Zuge des
Drehens der Filtergehäuse während der
Vergußmassenzufuhr die gewünschte Schrägstellung der
Vergußteile einstellt. Da die Schräglage der
aufeinander zuweisenden Sirnseiten der Vergußteile im
wesentlichen der Schrägstellung der Stutzen entsprechen
soll, stellt dies die Bemessungsgröße für den Abstand
der beiden Gehäuseteile während des Vergießens dar,
wobei die Drehachse zwischen den Längsachsen der
Gehäuse liegt, also keine der beiden Längsachsen
schneidet. Die Schrägen der Vergußteile sind dabei
Teile eines Kreises um die Drehachse.

Weitere Einzelheiten, Merkmale und Vorteile der
Erfindung ergeben sich aus nachfolgender Beschreibung
von Ausführungsbeispielen anhand der Zeichnung.

Es zeigt :

Fig. 1 einen leicht vereinfachten Längsschnitt durch
       eine Ausführungsform eines erfindungsgemäßen
       Filters und

Fig. 2 eine der Fig. 1 entsprechende Darstellung zweier
       Filter in ihrer Lage zueinander während der
       Herstellung von Verschlußteilen.

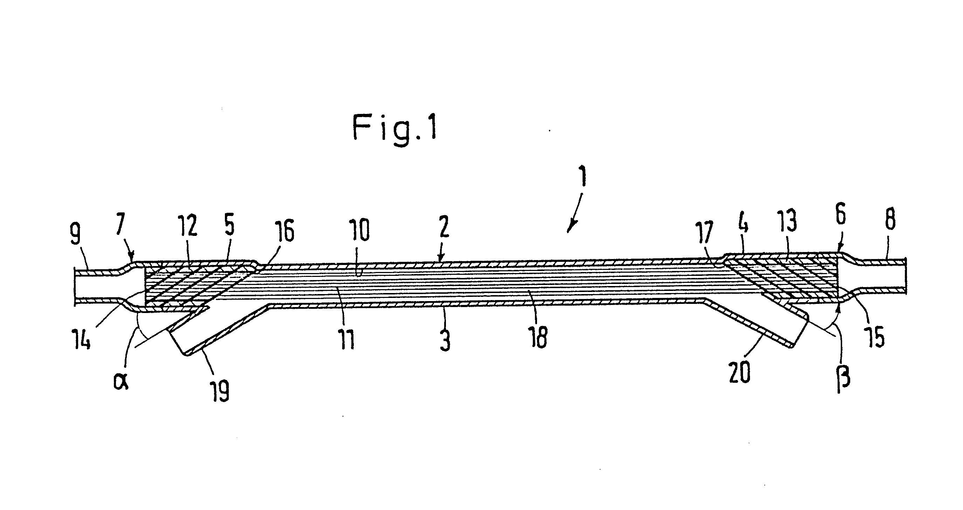

Gemäß Fig. 1 ist eine Ausführungsform eines
erfindungsgemäßen Hohlfaserfilters 1 dargestellt, das
ein Gehäuse 2 mit einem zylindrischen Mittelteil 3
aufweist, an das sich zu beiden Seiten zwei ebenfalls zylindrische, jedoch verdickte Endbereiche 4 und 5
anschließen. Auf den Endbereichen 4 und 5 ist jeweils
eine Kappe 6 bzw. 7 mit einem durchbohrten
Anschlußstutzen 8 bzw. 9 befestigt, an die in Fig. 1
nicht näher dargestellte Blutzu- bzw.
Blutabführleitungen angeschlossen werden können.

Das Gehäuse 2 weist ferner einen Innenraum 10 auf, der
sich über die gesamte Länge des Mittelteils 3 und der
Endbereiche 4 und 5 erstreckt und mit den
Anschlußstutzen 8 und 9 in Strömungsverbindung steht.

Im Innenraum 10 ist eine Filtermembran in Form einer
Mehrzahl von Hohlfasern angeordnet, die sich in
Längsrichtung des Gehäuses 2 bis in die Endbereiche
4 und 5 hinein erstrecken. Die Hohlfasern sind in Fig.
1 mit der Bezugsziffer 11 bezeichnet und aus Gründen
einer vereinfachten Darstellung lediglich als
Längslinien dargestellt, so daß darauf hinzuweisen ist,
daß die Hohlfasern natürlich ein Innenlumen aufweisen,
dessen Durchmesser vorzugsweise 200 $\mu$m beträgt. Bei
der in Fig. 1 dargestellten bevorzugten Ausführungsform
des erfindungsgemäßen Hohlfaserfilters 1 sind 85
derartige Hohlfasern 11 im Innenraum 10 angeordnet,
die eine Gesamtoberfläche von ungefähr 100 cm$^2$
aufweisen. Die Hohlfasern 11 können mit besonderem
Vorteil als Polypropylenkapillaren ausgebildet sein,
die hydrophilisiert sind. Es können jedoch auch andere
geeignete hydrophile Membranen verwendet werden.

Zwischen den Hohlfasern 11 verbleibt im Innenraum 10
des Gehäuses 2 ein Strömungsraum 18, dessen Querschnitt
sich aus der Differenz des Innenquerschnittes des
Innenraumes 10 minus dem Gesamtquerschnitt sämtlicher
Hohlfasern 11 errechnet.

Ferner ist aus Fig. 1 ersichtlich, daß in den
Endbereichen 4 des Gehäuses 2 Vergußteile 12 und 13
angeordnet sind, die eine jeweils nach außen weisende
Stirnfläche 14 bzw. 15 haben, die im wesentlichen
senkrecht zur Längsachse des Gehäuses 2 angeordnet ist.
Die diesen Stirnseiten 14 bzw. 15 gegenüberliegenden
und in Richtung auf den Innenraum 10 zuweisenden
Stirnseiten 16 bzw. 17 hingegen sind schräg angeordnet,
also in einem Winkel von weniger als 90° zur
Längsachse des Gehäuses 2. Die Vergußteile 12 und 13
umgeben die Endbereiche der Hohlfasern 11 und schließen
auch die Zwischenräume zwischen den Hohlfasern in deren
Endbereiche ab, so daß das zylindrische Mittelteil 3
des Gehäuses 2 durch die Vergußteile 12 und 13 dicht
von den Anschlußstutzen 8 und 9 der Kappen 6 bzw. 7
getrennt sind, m.a.W., wird der Mittelteil 3 und der
in diesen befindliche Innenraum 10 durch die
Vergußteile 12 und 13 begrenzt.

Die Stirnseiten der Hohlfasern 11 in der Ebene der
Stirnseiten 14 und 15 der Vergußteile 12 bzw. 13 sind
jedoch offen, so daß ein Strömungsdurchgng von den
Anschlußstutzen 8 bzw. 9 in die Hohlfasern 11, wobei
sich der Eintritt je nach Anschluß der Hohlfilters 1
richtet, durch das gesamte Filter hindurch zum jeweils
gegenüberliegenden Anschlußstutzen 9 bzw. 8 möglich ist.

Da die Hohlfasern als Filtermembranen mit
entsprechenden Filteröffnungen ausgebildet sind, ist
ferner ein Flüssigkeitsübertritt vom Innenraum der
Hohlfasern 11 in den Strömungsraum 18 zwischen den
Hohlfasern bzw. vom Strömungsraum 18 in das Innere der
Hohlfasern möglich. Dieser Flüssigkeitsübertritt kann
in seiner Richtung und Größe durch die angelegte
Druckdifferenz beeinflußt werden.

Das Gehäuse 2 weist bei der in Fig. 1 dargestellten Ausführungsform ferner einen weiteren Zulaufstutzen 19 und einen Ablaufstutzen 20 auf, wobei es ebenfalls möglich ist, Zulauf- und Ablaufrichtung frei festzulegen, so daß auch der Stutzen 20 als Zulauf und der Stutzen 19 als Ablauf aufgefaßt werden kann. Die Zu- bzw. Ablaufstutzen 19 bzw. 20 münden in den Innenraum 10 im Bereich der Vergußteile 12 bzw. 13 und sind in einem Winkel α bzw. ß zur Längsachse des Gehäuses 2 angeordnet. Wie aus Fig. 1 ersichtlich ist, entspricht die Schrägstellung Zu- bzw. Ablaufstutzen 19 bzw. 20 zumindest in etwa der Schrägstellung der Stirnseiten 16 und 17 der Vergußteile 12 und 13, was das Strömungsverhalten der durch die Zu- bzw. Ablaufstutzen 19 bzw. 20 ein- bzw. ausgeleiteten Flüssigkeit vorteilhaft beeinflußt. Darüber hinaus ist aus der Darstellung in Fig. 1 ersichtlich, daß sich die Vergußteile 12 und 13 mit ihren Stirnseiten 16 und 17 so weit in die Endbereiche 12 und 13 des Gehäuses 2 erstrecken, daß keinerlei Toträume entstehen, in denen sich Flüssigkeitsrückstände ansammeln könnten, die bei einer Spülung des Hohlfaserfilters 1 nicht wieder aus dem Innenraum 10 entfernt werden könnten. Hierzu schließen die Stirnseiten 16 und 17 bündig an die Zu- bzw. Ablaufstutzen 19 bzw. 20 an und enden in ihrer gemäß der in Fig. 1 gewählten Darstellung oberen Hälfte ungefähr im Bereich des Überganges von den verdickten Endbeeichen 4 bzw. 5 in den zylindrischen Mittelteil 3, was im wesentlichen einer Verlängerung der Zu- bzw. Ablaufstutzen 19 bzw. 20 in das Gehäuse entspräche.

Bei der in Fig. 1 dargestellten Ausführungsform ist es mit besonderem Vorteil möglich, an die Zu- bzw. Ablaufstutzen 19 bzw. 20 die Blutzu- bzw. abführrleitungen anzuschließen, so daß die Blutströmung in den Strömungsrraum 18, also im Außenbereich der

Hohlfasern 11, erfolgt. Dies ergibt den Vorteil, daß die Blutströmung nur einem äußerst geringen Durchflußwiderstand gegenübersteht, der noch dadurch herabgesetzt wird, daß der Querschnitt des freien Strömungsraumes 18 demjenigen der in Fig. 1 nicht näher dargestellten Blutzu- bzw. abführleitung angepaßt ist.

Darüber hinaus wird die störungsfreie Blutströmung noch durch die schräge Anordnung der Zu- bzw. Ablaufstutzen 19 bzw. 20, die einen äußerst günstigen Strömungsübergang in den Innenraum 10 des Gehäuses 2 ermöglicht, unterstützt.

Bei dieser Art des Anschlusses des Hohlfaserfilters 1 an eine Blutleitung ergibt sich also eine Filtration vom Strömungsraum 18 in die Hohlfasern 11 hinein, so daß die gewonnene Plasmaprobe entweder durch den Anschlußstutzen 8 oder 9 oder auch durch beide hindurch abgenommen werden kann. Wird lediglich ein Anschlußstutzen 8 bzw. 9 zur Ableitung des Plasmas bzw. Plasmawassers benötigt, kann der andere durch einen entsprechenden Stopfen verschlossen werden.

Andererseits ermöglicht die in Fig. 1 dargestellte Ausführungsform des erfindungsgemäßen Filters jedoch aufgrund der Tatsache, daß jeweils zwei Zuführleitungen und zwei Abführleitungen vorgesehen sind, auch einen Anschluß der Blutleitungen an die Anschlußstutzen 8 und 9, so daß auch eine Filtration vom Innenraum der Hohlfasern 11 in den äußeren Strömungsraum 18 möglich ist, also eine Filtration von innen nach außen, bei der dann das anfallende Plasma bzw. Plasmawasser durch einen oder beide Zu- bzw. Ablaufstutzen 19 bzw. 20 abgenommen wird. Diese Art des Anschlusses bietet sich insbesondere bei sehr geringen Blutflüssen an, da hierbei der erhöhte Durchflußwiderstand der Kapillaren 11 nicht sehr ins Gewicht fällt.

Unabhängig von der Art des Anschlusses des
Hohlfaserfilters 1 wird die jeweils erforderliche
Druckdifferenz zur Ausführung der Filtration
vorteilhafterweise durch Anlegen einer Druckdifferenz
mittels eine Pumpe bewerkstelligt, die auch das
gewonnene Filtrat abführt.

Vorteilhafterweise kann beim Anschluß der Blutleitung
an den freien Strömungsraum 18 ein Blutfluß zwischen
20 bis über 400 ml/min realisiert werden.

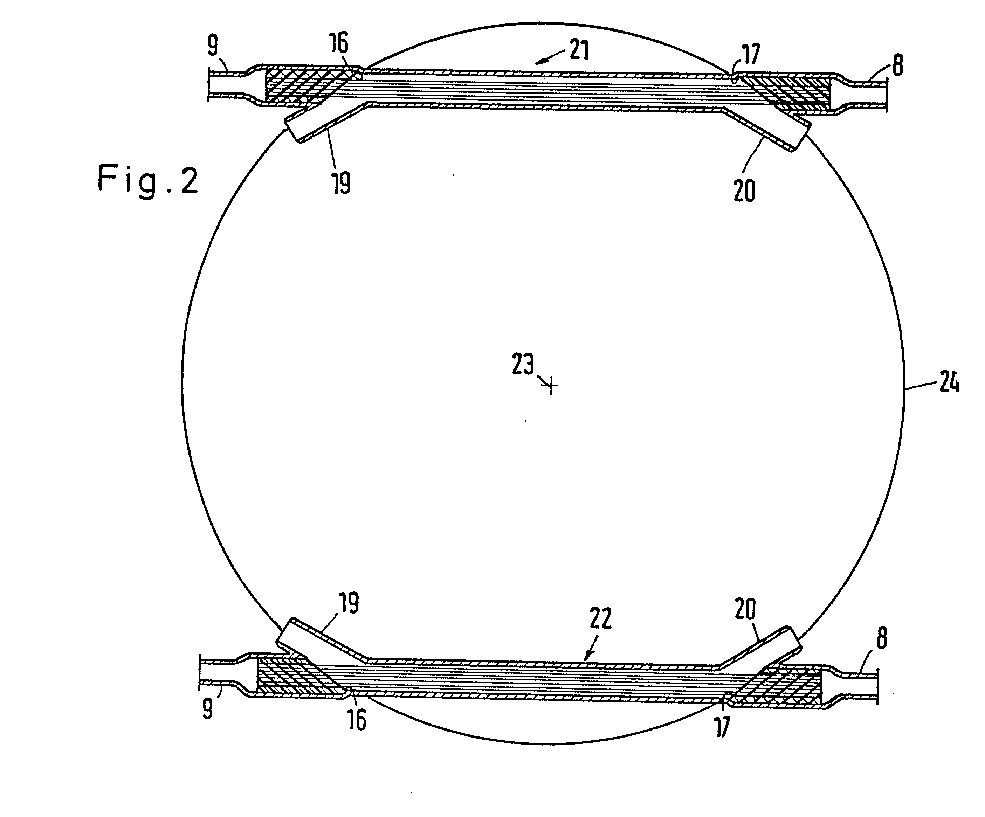

Gemäß Fig. 2 ist eine Anordnung von zwei
erfindungsgemäßen Filtern 21 und 22 veranschaulicht,
deren Aufbau und Funktion exakt derjenigen des
Hohlfaserfilters 1 gemäß Fig. 1 entspricht, so daß
diesbezüglich auf die Beschreibung zu Fig. 1 Bezug
genommen werden kann.

Die Darstellung in Fig. 2 soll die Anordnung der Filter
21 und 22 bei der Herstellung der Endbereiche 12 und
13 verdeutlichen. Die Filter 21 und 22 werden hierbei
auf einer geeigneten Tragfläche in einer Ebene parallel
zueinander angeordnet, so daß die An- bzw.
Ablaufstutzen 19 und 20 aufeinander zuweisen, wie dies
im einzelnen aus Fig. 2 ersichtlich ist. Würde man die
Zu- bzw. Ablaufstutzen 19 und 20 mit Linien senkrecht
zur Längsachse der beiden Filter 21 und 22 verbinden,
entstünde also ein Sechseck, wobei der Abstand der
Filter 21 und 22 voneinander davon abhängt, in welchem
Winkel die Zu- bzw. Ablaufstutzen 19 und 20 bezüglich
der Gehäuse der Filter 21 und 22 angeordnet sind, da
davon wiederum die Schrägstellung der Stirnseiten 16
und 17 der Endbereiche 12 und 13 abhängt.

Zur Herstellung mittels einer Zentrifuge und einer vorzugsweise auf Polyurethan bestehenden Vergußmasse werden die Anschlußstutzen 8 und 9 mit Zuleitungen für die Vergußmasse versehen, die in Fig. 2 nicht näher dargestellt sind. Des weiteren ist die Fläche bzw. Platte 24, auf der die Filter angeordnet sind, drehbar gelagert, wobei sich der Drehpunkt, der in Fig. 2 mit dem Kreuz 23 bezeichnet ist, zwischen den Filtern 21 und 22 befindet, also die durch den Punkt 23 verlaufende senkrecht auf der Zeichnungsebene stehende Drehachse weder die Längsachse des Filters 21 noch die Längsachse des Filters 22 schneidet. Werden nun die Filter 21 und 22 während des Zuführens der Vergußmasse durch die Anschlußstutzen 8 bzw. 9 um den Drehpunkt 23 herumgedreht, stellen sich aufgrund der einwirkenden Kräfte die Stirnseiten 16 und 17 in der gewünschten Schrägstellung während des Vergießens automatisch ein, so daß letztendlich die in Fig. 1 und 2 dargestellte Schrägstellung entsteht. Aus Fig. 1 ist ersichtlich, daß die Stirnseiten 16 und 17 Teile eines Kreises 24 um die Drehachse 23 sind, während die Stutzen 19 und 20 Sekanten dieses Kreises 24 bilden.

Nach dem Vergießen werden die nach außen weisenden Stirnseiten der Vergußteile 12 und 13, die die Öffnungen der Hohlfasern 11 verschlossen haben, abgeschnitten, so daß die Hohlfasern wieder geöffnet werden, wonach die Kappen 6 und 7 auf die Endbereiche der vergossenen Hohlfasern aufgesteckt und mit dem Gehäuse 2 verbunden werden.

0229388

## Patentansprüche

1. Hohlfaserfilter für die Gewinnung von Plasma bzw. Plasmawasser, wobei die Hohlfasern sich in Längsrichtung des Gehäuses erstrecken und an ihren gegenseitigen Enden Vergußteile aufweisen, zwischen denen ein freier Strömungsraum für eine Flüssigkeit außerhalb der Hohlfasern gebildet ist, der an seinen gegenüberliegenden Enden seitlich angeordnete Zu- bzw. Ablaufstutzen aufweist, dadurch gekennzeichnet, daß die Vergußteile (12, 13) an ihren dem Gehäuseinnenraum (10) zugewandten Seiten (16, 17) jeweils eine schräg zur Längsachse des Hohlfaserfilters (1) verlaufende Fläche derart aufweisen, daß der Blutstrom von den schräg verlaufenden Flächen ungehindert in und aus dem freien Strömungsraum (18) geleitet wird und daß die Zu- bzw. Ablaufstutzen (19, 20) an die Blutzu- bzw. Abführleitungen des Blutleitungssystems anschließbar sind.

2. Hohlfaserfilter nach Anspruch 1, gekennzeichnet dadurch, daß die Zu- und Ablaufstutzen (19, 29) bzw. die Anschlußstutzen (8, 9) an Blut- bzw. Plasmaleitungen anschließbar sind.

3. Hohlfaserfilter nach Anspruch 1, dadurch gekennzeichnet, daß der Blutzulaufstutzen und der Blutablaufstutzen (19, 20) in einem spitzen Winkel ($\alpha$, ß) von kleiner $90^{\circ}$ am Gehäuse angeordnet sind.

4. Hohlfaserfilter nach Anspruch 3, dadurch
   gekennzeichnet, daß der Winkel ($\alpha$, ß) etwa 30°
   beträgt.

5. Verfahren zur Herstellung eines Plasmafilters mit
   schräg am Gehäuse angeordneten Zulauf- und
   Ablaufstutzen, bei welchem nach Einbringung von
   Hohlfasern in den Innenraum eines Gehäuses die Enden
   der Hohlfasern mit einer Vergußmasse mittels einer
   Zentrifuge vergossen werden, wonach die Stirnseiten
   der vergossenen Endbereiche der Hohlfasern zur
   Öffnung der Strömungsquerschnitte abgetrennt werden
   und über diese geöffneten Enden jeweils eine Kappe
   gestülpt wird, die am Gehäuse befestigt wird,
   dadurch gekennzeichnet, daß wenigstens ein
   Filtergehäuse auf einer Platte angeordnet wird, daß
   das Filtergehäuse an seinen Stirnseiten mit den
   Zuführleitungen für die Vergußmasse verbunden wird
   und daß die mit dem Filtergehäuse versehene Platte
   während und/oder nach dem Zuführen der Vergußmasse
   um eine Drehachse gedreht wird, die senkrecht auf
   der Platte des Filtergehäuses steht, jedoch die
   Längsachse des Gehäuses nicht schneidet.

6. Verfahren nach Anspruch 5, dadurch gekennzeichnet,
   daß der Abstand der Gehäuse voneinander in
   Abhängigkeit von dem Winkel der Schrägstellung der
   Endbereiche gewählt wird.

7. Verfahren nach Anspruch 5, dadurch gekennzeichnet,
   daß die schrägen Stirnseiten Teile eines Kreises
   um den Drehpunkt der Auflagefläche sind.

Fig.1

Fig.2